# EUROPEAN PATENT SPECIFICATION

(11) **EP 1 043 911 B1**
(45) Date of publication and mention of the grant of the patent: **21.12.2005**
(21) Application number: 00302818.0
(22) Date of filing: 04.04.2000
(51) Int. Cl.: H04Q 7/38

(54) **Provision of local information**
Positionsspezifische Informationsdienst
Service d'information locale

(30) Priority: 07.04.1999 GB 9907772
(43) Date of publication of application: 11.10.2000
(73) Proprietor: Pace Micro Technology PLC, Shipley, West Yorkshire BD18 3LF (GB)
(72) Inventor: Entwistle, Paul, Oxenhope, West Yorkshire (GB)
(74) Representative: Wood, Graham

(56) References cited:
- EP-A- 0 797 368
- WO-A-97/41654
- US-A- 5 822 324

## Description

The invention to which this application relates is apparatus and a system for providing an information service to the user of an electronic device which is capable of receiving signals from a remote location. In particular, but not necessarily exclusively, the invention relates to the provision of the information over a mobile phone network and/or over a broadcast signal network such as satellite, cable, digital or terrestrial television broadcasting systems.

At the present time it is possible to obtain information relating to a particular area such as obtaining travel information via a radio network and if the radio can receive signals from various broadcasters then the radio system operates so that every time one of the radio stations broadcasts traffic information the same is broadcast with identifying data so that the channel which is being listened to at that time is interrupted automatically and the traffic information provided. It is also possible for users of mobile telephones to phone up traffic information services and obtain information for the general area in which they are located. However, because of the nature of trying to provide traffic information in a general area, any user of these systems will frequently become irritated by the fact that the traffic information is not customised for their specific needs and it is left to the user to select from the information provided what is relevant to them.

The aim of the present invention is to provide a means whereby customised information can be provided to the user of the system of the invention and whereby said customised information is specifically related to the particular user rather than directed towards a number of users in a general area.

WO97/41654 discloses a number of techniques for locating a mobile terminal in terms of its longitude and latitude, and also a system for providing location dependent information based on the geographic location of the terminal. However the menus and information provided are in accordance with a customer profile defined by the user.

In the first aspect of the invention there is provided an information provision system, said system comprising an electronic device for use in the receipt and/or transmission of data signals from and to a remote location, means for transmitting at the remote location the data signals, and a means for displaying said received data signals via the device at the location of the user or via other apparatus linked to the device by the generation of video and/or audio and characterised in that the system includes a geographical location indicator being indicated by a signal which is transmitted from the device to the remote location and the generation of information at the remote location on a topic or topics selected by the user, which information is specifically customised to the identified location including a desired area specific to a radius around the identified location and said customised information data transmitted to the device.

In one embodiment the topic or topics selected by the user of the device is/are pre selected and stored at the remote location or alternatively a topic indicator can be transmitted by the user from the device at the time of the transmission of the location indication. The topic or topics of information can be any of a range of topics such as, but selected from any of traffic conditions, weather conditions, sports information, event listings.

In one embodiment the information data transmitted to the device is generated in relation to the location of the device at the instant of use. In one embodiment the device is configured to transmit a location identifying signal for the location of the device at the time of use by default.

In an alternative embodiment the information sent to the device is generated in relation to a location which is selected by the user of the device and need not be the actual location of the device.

In one embodiment the device which is used is a mobile or cellular phone. When using the phone, one form of use of the system is that the user of the mobile phone commences the system by dialling a number which allows connection with a remote information source or provider which could be the mobile phone network operator or some other independent information provider. By making the call, a location indication can be provided for the location of the mobile phone at the instant of use which can be identified by the information source or alternatively a location is selected by the user and identified by a code, verbal instruction or otherwise to the information provider. The information provider may already have been instructed on the topic or topics of interest or alternatively the user can provide these instructions at the time of use. The information provider can then generate any relevant information for that location in relation to the topic or topics specified and transmits the information data to the mobile phone and hence the user.

In one embodiment the user of the mobile phone subscribes to an information provision service and the location of the mobile phone is located at regular intervals by the service provider and information generated and transmitted in relation to specified topics at regular intervals and transmitted to the mobile phone.

In an alternative embodiment the device is a television broadcast data receiver and the location of the receiver can be identified to an information provider, which may be the broadcast service provider and/or another information service provider, who the user can subscribe to.

The invention therefore provides an information provision system which utilises an electronic device which is capable of receiving and transmitting data to provide information to the user of the device which is of specific relevance to the location of the device or to another location specified by the user of the device. This differs from conventional information systems which either provide general information to users of devices which is non location specific or alternatively provide information which is transmitted to a general area and if the device which is used to receive the data happens to be in that area it will receive that information. In contrast, in accordance with the current invention the device used allows the user to specify to the information provider the current location or another location of interest and so allows the provider to collect and or access information which is specific to that location as determined by the particular device rather than blindly transmitting information to any devices in a general area.

The information which is transmitted to the device can be specific to any desired area around the specified location. For example, it could be specific to a 1 mile radius, 10 mile radius and so on. The information could relate to traffic conditions in the vicinity of the device or could equally relate to weather, or any other range of information which may be of interest to the user and specified by them.

In one embodiment the information on selected topics can be transmitted at regular intervals to the device as the location of the device is tracked by the information provider, said tracking achieved either by identifying the location each time the device is used and/or the device transmitting a location indicator at regular intervals, and the user can select whether to refer to the information or not at that time.

The embodiments herein described with reference to mobile phones can be equally applied to any broadcast or transmitted data receiving devices and the location of which can be identified to information providers.

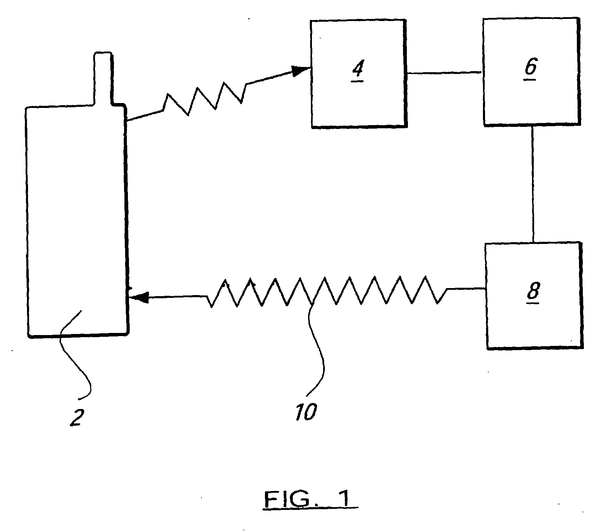

A specific embodiment of the invention is now described with reference to the accompanying drawing, wherein the drawing illustrates a system in one embodiment of the invention utilising a mobile phone as the device in accordance with the invention.

In a mobile phone system the operator of the network is able to ascertain the location of the each mobile phone by identifying the particular area or cell of the network in which the phone is being used at that time. It is this process and moving from cell to cell which allows the mobile phone to be used in travel and for the cell in which the phone is used to be "changed" or "handed over" to adjacent cells within the network as it is used. Thus the ability to identify the location of a mobile phone by the network operator is known.

A user of the mobile phone 2 in accordance with the invention who, for example, wishes to obtain traffic information relating to the specific location of the mobile phone at that instant of use, makes a call to a traffic information service provider 4. From the call received the information provider analyses the signal and obtains the location of the mobile phone 6 with respect to the cell in which it is being used. With the location identified, the information provider generates from their database, information 8 which relates to that specific location, say, for example, information relating to traffic conditions within a 10 mile radius of the location. The information is then sent, 10, via a remote transmission system which can be the mobile phone network, to the mobile phone and can be displayed automatically on a screen provided on the mobile phone or alternatively, may be provided in the form of a call back and audio transmission to the user to whom the information is read out. As the information which is provided is location dependent on the mobile phone and not related to a general area, so the information which is provided can be significantly more detailed and therefore may include information which otherwise would not be transmitted due to time constraints on more traditional information providers such as, for example, radio or television programmes. It is also possible that when making the initial contact the user can have the ability to specify location for which the information is sought which differs from the location of the mobile phone at that instant.

In an alternative embodiment when the system of the invention is used in conjunction with a set top box receiver, the position of the receiver is identified via the installation location databases held by the installing company and/or services provided to the receiver and each set top box can be uniquely identified.

There is therefore provided an information service which allows the provision of information to a user and which information is specifically linked to the location of that user at that time without the need for the user to install relatively complex traffic information systems and/or input their location or otherwise operate systems which are specifically related to information provision. The invention allows the utilisation of conventional and existing devices which the user may have for other purposes to provide additional information and this is a major advantage.

## Claims

1. An information provision system, said system comprising an electronic device (2) for use in the receipt and/or transmission of data signals from and to a remote location, means for transmitting at the remote location the data signals (10), and a means for displaying said received data signals (10) via the device (2) at the location of the user or via other apparatus linked to the device whereby the system includes a geographical location indicator being indicated by a signal which is transmitted from the device to the remote location and the generation of information (8) at the remote location on a topic or topics selected by the user, which information (8) is specifically customised to the identified location (6) **characterised in that** it includes a desired area specific to a radius around the identified location (6) and said customised information data (10) transmitted to the device (2).

2. An information provision system according to claim 1 **characterised in that** the information (8) sent to the device (2) is generated in relation to a location which is the location of the device at the instant of use.

3. An information provision system according to claim 2 **characterised in that** the device (2) transmits a location identifying signal for the location of the device by default at the time of use.

4. An information provision system according to claim 1 **characterised in that** the information (8) sent to the device (2) is generated in relation to a location which is selected by the user of the device (2).

5. An information provision system according to claim 1 **characterised in that** the topic for information is selected from any of traffic conditions, weather conditions, sports information, event listings.

6. An information provision system according to claim 1 **characterised in that** the device (2) is a mobile phone.

7. An information provision system according to claim 6 **characterised in that** the user of the mobile phone (2) commences the system by dialling a number which represents an information source (4) and upon receipt of the call the information source (4) undertakes a location finding exercise to locate the position (6) of the mobile phone or a location identified by the user and then generates information (8) for that location in relation to the topic or topics specified by the user and transmits the same to the mobile phone (2).

8. An information provision system according to claim 6 **characterised in that** the user of the mobile phone (2) subscribes to an information provision service and the location (6) of the mobile phone is located at regular intervals by the service provider (4) and information (8) generated and transmitted in relation to specified topics at regular intervals and transmitted to the mobile phone (2).

9. An information provision system according to claim 1 **characterised in that** the device is a television broadcast data receiver.

10. An information provision system according to claim 9 **characterised in that** the location of the receiver is identified to an information provider 4 which may be the broadcast service provider and/or another information service provider who the user can subscribe to.

## Patentansprüche

1. Informationssystem, das Folgendes umfasst: ein elektronisches Gerät (2) für die Verwendung beim Empfangen und/oder Senden von Datensignalen von und zu einem fernen Ort, Mittel zum Senden der Datensignale (10) an dem fernen Ort und ein Mittel zum Anzeigen der genannten empfangenen Datensignale (10) über das Gerät (2) am Ort des Benutzers oder über eine andere Vorrichtung, die mit dem Gerät verbunden ist, wobei das System eine geografische Ortsanzeige, die durch ein Signal gegeben wird, das von dem Gerät zu dem fernen Ort gesendet wird, und die Erzeugung von Informationen (8) an dem fernen Ort über (ein) vom Benutzer gewählte(s) Thema/Themen beinhaltet, wobei diese Informationen (8) speziell auf den identifizierten Ort (6) zugeschnitten sind, **dadurch gekennzeichnet, dass** er einen gewünschten Bereich einschließt, der für einen Radius um den identifizierten Ort (6) spezifisch ist, und wobei die genannten kundenspezifischen Informationsdaten (10) zu dem Gerät (2) gesendet werden.

2. Informationssystem nach Anspruch 1, **dadurch gekennzeichnet, dass** die zu dem Gerät (2) gesendeten Informationen (8) in Bezug auf einen Ort erzeugt werden, bei dem es sich um den Standort des Gerätes zum Gebrauchszeitpunkt handelt.

3. Informationssystem nach Anspruch 2, **dadurch gekennzeichnet, dass** das Gerät (2) vorgabemäßig ein Ortsidentifikationssignal über den Standort des Gerätes zum Gebrauchszeitpunkt sendet.

4. Informationssystem nach Anspruch 1, **dadurch gekennzeichnet, dass** die zu dem Gerät (2) gesendeten Informationen (8) in Bezug auf einen Ort erzeugt werden, der vom Benutzer des Gerätes (2) gewählt wird.

5. Informationssystem nach Anspruch 1, **dadurch gekennzeichnet, dass** das Informationsthema ausgewählt wird aus Verkehrsbedingungen, Wetterbedingungen, Sportinformationen, Veranstaltungskalendern.

6. Informationssystem nach Anspruch 1, **dadurch gekennzeichnet, dass** das Gerät (2) ein Mobiltelefon ist.

7. Informationssystem nach Anspruch 6, **dadurch gekennzeichnet, dass** der Benutzer des Mobiltelefons (2) das System durch Wählen einer Nummer aktiviert, die eine Informationsquelle (4) repräsentiert, und die Informationsquelle (4) nach dem Erhalt des Anrufs einen Ortungsvorgang durchführt, um die Position (6) des Mobiltelefons oder einen vom Benutzer identifizierten Ort zu ermitteln, und dann Informationen (8) für diesen Ort in Bezug auf das/die vom Benutzer vorgegebene(n) Thema/Themen erzeugt und diese dann zum Mobiltelefon (2) sendet.

8. Informationssystem nach Anspruch 6, **dadurch gekennzeichnet, dass** der Benutzer des Mobiltelefons (2) einen Informationsdienst abonniert und der Standort (6) des Mobiltelefons in regelmäßigen Abständen vom Diensteanbieter (4) geortet wird und in regelmäßigen Abständen in Bezug auf vorgegebene Themen erzeugte und gesendete Informationen (8) zum Mobiltelefon (2) gesendet werden.

9. Informationssystem nach Anspruch 1, **dadurch gekennzeichnet, dass** das Gerät ein Fernsehdatenempfänger ist.

10. Informationssystem nach Anspruch 9, **dadurch gekennzeichnet, dass** der Standort des Empfängers einem Informationsanbieter 4 identifiziert wird, bei dem es sich um den Rundfunkdiensteanbieter und/oder einen anderen Informationsdiensteanbieter handeln kann, bei dem der Benutzer Abonnent sein kann.

## Revendications

1. Système de prestation d'informations, ledit système comprenant un dispositif électronique (2) destiné à être utilisé pour la réception et/ou la transmission de signaux de données à partir d'un emplacement distant, et vers celui-ci, un moyen servant à transmettre les signaux de données (10) au niveau de l'emplacement distant, et un moyen servant à afficher lesdits signaux de données (10) reçus via le dispositif (2) au niveau de l'emplacement de l'utilisateur ou bien via un autre appareil relié au dispositif, cas dans lequel le système inclut un indicateur d'emplacement géographique lequel est indiqué par un signal qui est transmis à partir du dispositif vers l'emplacement distant, ainsi que la génération d'informations (8) au niveau de l'emplacement distant concernant un sujet, ou des sujets, sélectionné(s) par l'utilisateur, informations (8) qui sont spécifiquement adaptées à l'emplacement identifié (6), **caractérisé en ce qu'**il comprend une zone désirée qui est spécifique à un rayon autour de l'emplacement identifié (6) et lesdites données d'information personnalisées (10) sont transmises au dispositif (2).

2. Système de prestation d'informations, selon la revendication 1, **caractérisé en ce que** les informations (8) envoyées au dispositif (2) sont générées en rapport avec un emplacement qui est l'emplacement du dispositif au moment de son utilisation.

3. Système de prestation d'informations, selon la revendication 2, **caractérisé en ce que** le dispositif (2) transmet un signal d'identification d'emplacement afin de donner par défaut l'emplacement du dispositif au moment de son utilisation.

4. Système de prestation d'informations, selon la revendication 1, **caractérisé en ce que** les informations (8) envoyées au dispositif (2) sont générées en rapport avec un emplacement qui est sélectionné par l'utilisateur du dispositif (2).

5. Système de prestation d'informations, selon la revendication 1, **caractérisé en ce que** le sujet d'information est sélectionné parmi l'une quelconque des rubriques suivantes : conditions de la circulation, conditions météo, informations sportives, listages de manifestations.

6. Système de prestation d'informations, selon la revendication 1, **caractérisé en ce que** le dispositif (2) est un téléphone mobile.

7. Système de prestation d'informations, selon la revendication 6, **caractérisé en ce que** l'utilisateur du téléphone mobile (2) amorce le système en composant un numéro qui représente une source d'informations (4) et, après réception de l'appel, la source d'informations (4) entreprend un exercice de repérage de l'emplacement afin de déterminer la position (6) du téléphone mobile ou un emplacement identifié par l'utilisateur, et puis elle génère des informations (8) pour cet emplacement en rapport avec le sujet ou les sujets spécifié(s) par l'utilisateur et transmet celui-ci, ou ceux-ci, au téléphone mobile (2).

8. Système de prestation d'informations, selon la revendication 6, **caractérisé en ce que** l'utilisateur du téléphone mobile (2) souscrit un abonnement pour un service de prestation d'informations, et l'emplacement (6) du téléphone mobile est déterminé à intervalles réguliers par le fournisseur de services (4) et des informations (8) sont générées et transmises en rapport avec des sujets spécifiques à des intervalles réguliers et sont transmises au téléphone mobile (2).

9. Système de prestation d'informations, selon la revendication 1, **caractérisé en ce que** le service est un récepteur de données diffusées pour la télévision.

10. Système de prestation d'informations, selon la revendication 9, **caractérisé en ce que** l'emplacement du récepteur est signalé à un fournisseur d'informations (4), qui peut être le fournisseur des services diffusés et/ou un autre fournisseur de services d'informations auprès duquel l'utilisateur peut souscrire un abonnement.
